Europäisches Patentamt

European Patent Office

Office européen des brevets

(19)

(11) **EP 0 874 228 A1**

## (12) DEMANDE DE BREVET EUROPEEN

(43) Date de publication:
28.10.1998 Bulletin 1998/44

(51) Int. Cl.$^6$: **G01J 3/12**

(21) Numéro de dépôt: 97402924.1

(22) Date de dépôt: 03.12.1997

(84) Etats contractants désignés:
AT BE CH DE DK ES FI FR GB GR IE IT LI LU MC NL PT SE
Etats d'extension désignés:
AL LT LV MK RO SI

(30) Priorité: 24.04.1997 FR 9705085

(71) Demandeur: Dilor S.A.
59000 Lille (FR)

(72) Inventeurs:
• Da Silva, Edouard
59800 Lille (FR)

• Delhaye, Michel
59493 Villeneuve d'Ascq (FR)
• Leclercq,Michel
77590 Bois le Roi (FR)
• Roussel, Bernard
59300 Valenciennes (FR)

(74) Mandataire: Michelet, Alain et al
Cabinet Harlé et Phélip
7, rue de Madrid
75008 Paris (FR)

(54) **Procédé et dispositif d'optimisation de la position et de la largeur de la bande de coupure d'un dispositif de filtrage optique**

(57) Le premier filtre (EF1) est incliné d'un angle d'incidence dont la valeur est ajustée pour rapprocher la limite de coupure du premier filtre (EF1) vers l'un des côtés de la raie du faisceau d'illumination (FLA), ce qui diminue la densité optique du premier filtre, tandis que l'association en série des premier (EF1) et second (EF2) filtres permet d'obtenir un filtrage du type passe-haut dont la densité globale correspond à la somme des densités des premier et second filtres et dont la limite de coupure est plus basse que celle obtenue par un seul filtre incliné à son angle optimal. Un troisième filtre (EF3) monté en parallèle par rapport aux filtres (EF1 et EF2) permet d'obtenir, au niveau du trajet de collection commun (TCC), un filtrage coupe-bande dont les limites de coupure sont positionnées de part et d'autre de la raie d'illumination en vue d'une analyse optimale des raies de basse fréquence.

FIG.11B

# Description

La présente invention concerne l'optimisation de la position et de la largeur de la bande de coupure d'un dispositif de filtrage optique.

Elle trouve une application générale en spectrométrie où la présence d'une raie spectrale très intense, généralement la raie excitatrice, empêche ou gêne la détection de raies ou de bandes spectrales de plus faible intensité et situées à des longueurs d'ondes voisines et de part et d'autre de celle de ladite raie intense (appelées ci-après basses fréquences).

Elle trouve ainsi une application en spectrométrie d'émission, de diffusion (RAMAN), de fluorescence, de luminescence ou d'absorption, et plus particulièrement en spectrométrie dispersive ou interférentielle.

On entendra dans la description par "lumière émise", la lumière globale émise par l'échantillon. Elle englobe par conséquent la lumière effectivement diffusée par l'interaction des photons de la raie excitatrice avec les phonons du matériau constitutif de l'échantillon, mais aussi la lumière réfléchie, la lumière diffusée, la lumière de photoluminescence, ...

On connaît déjà des filtres optiques qui réalisent la réjection ou l'absorption d'une ou plusieurs bandes spectrales étroites. D'une manière générale, ces filtres optiques sont classés en trois catégories.

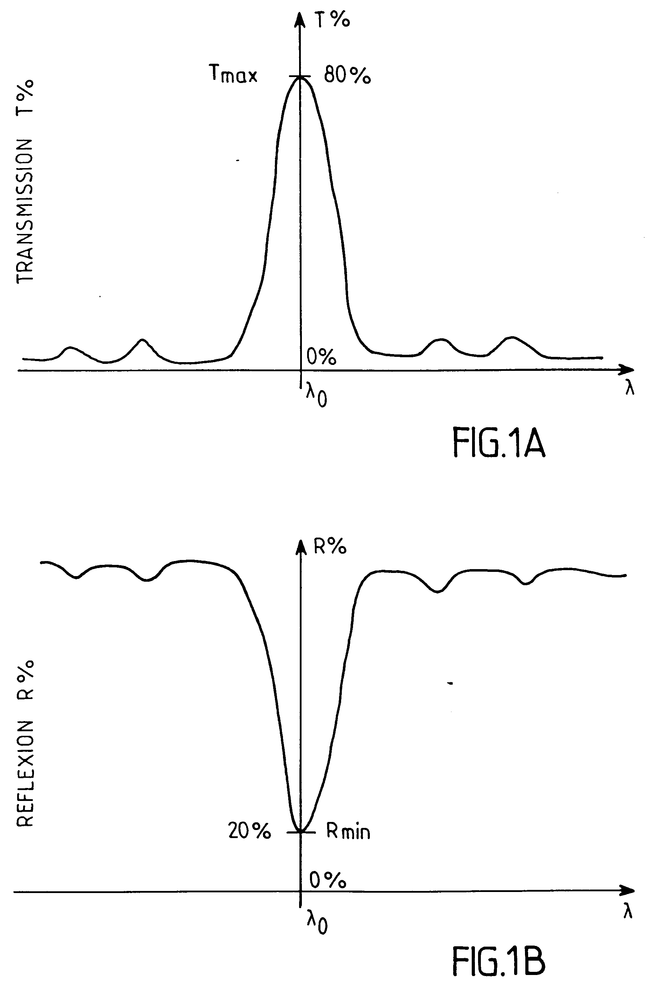

En référence aux figures 1A et 1B, la première catégorie comprend des filtres optiques qui présentent en transmission une bande passante étroite centrée sur une longueur d'onde $\lambda_0$ avec une valeur typique du maximum de transmission TMAX de l'ordre de 50 à 80% (figure 1A). La réponse spectrale du filtre en réflexion (figure 1B) est rigoureusement complémentaire, aux pertes près, de celle en transmission et présente donc un minimum RMIN à la longueur d'onde $\lambda_0$. La courbe de réponse en réflexion présente à des longueurs d'ondes assez éloignées de la longueur d'onde $\lambda_0$ d'autres pics ou bandes secondaires attribués à d'autres ordres d'interférence. Cette première catégorie comprend des filtres de type Fabry-Perot, des filtres interférentiels à cavités multiples, des filtres multidiélectriques réalisés par des techniques de dépôt de couches minces...

L'homme de l'art sait que la bande de coupure de ces filtres interférentiels peut être déplacée dans le spectre, soit par variation de l'indice du milieu, soit par variation de la distance entre les couches réfléchissantes, soit par variation de l'angle d'incidence qui entraîne une variation apparente de l'épaisseur optique des couches.

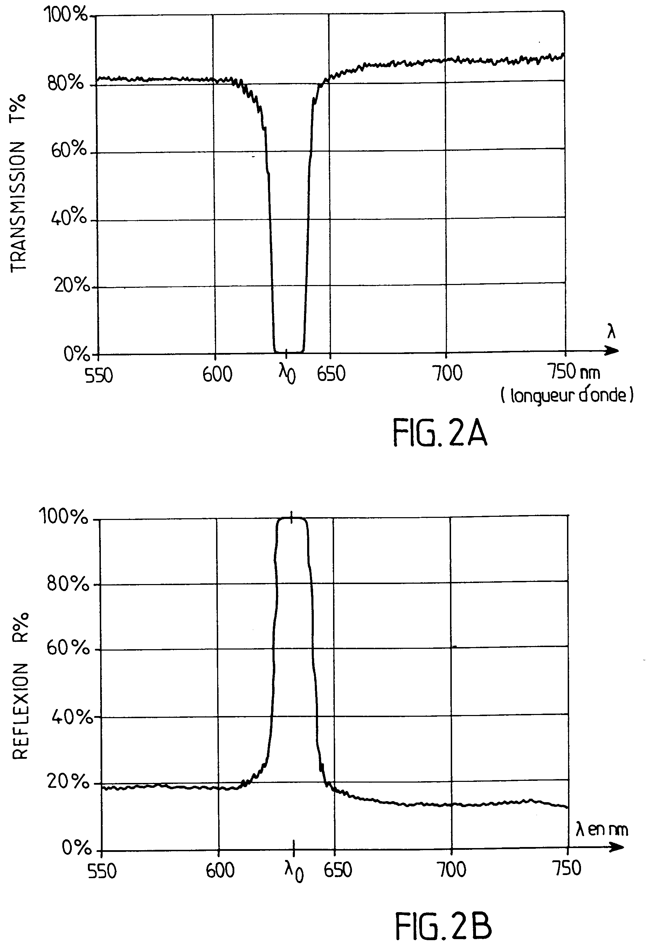

En référence aux figures 2A et 2B, la seconde catégorie comprend des filtres optiques qui présentent une réponse inverse à celle de la première catégorie. En transmission (figure 2A), ils ont donc une bande de coupure avec un créneau étroit de réjection centré sur une longueur d'onde choisie (ici, $\lambda_0$ est de 632,8 nm et le filtre est celui vendu par la société américaine KAISER OPTICAL SYSTEMS sous la référence "Holographic Notch plus filter"). En réflexion (figure 2B), ils ont une réponse complémentaire de celle en transmission avec un pic centré sur la longueur d'onde $\lambda_0$ choisie. Dans leur bande de coupure, ces filtres ont une densité optique très élevée (supérieure à 6), ce qui leur permet de rejeter une raie intense.

Comme les filtres de la première catégorie, la bande de coupure des filtres de la seconde catégorie peut être déplacée par variation de l'angle d'incidence. Les filtres de la seconde catégorie sont le plus souvent réalisés selon une technique holographique, où les interférences entre deux faisceaux cohérents produisent une variation périodique de l'indice de réfraction d'un matériau photosensible sous forme de strates parallèles dans une couche épaisse.

Cette seconde catégorie comprend les filtres interférentiels de type LIPPMANN, les réseaux de phase en volume, les filtres holographiques dits NOTCHS, ou les filtres de BRAGG ou ASHER.

La troisième catégorie de filtres comprend les filtres optiques à absorption qui ne présentent pas la complémentarité des réponses spectrales en transmission et en réflexion. Ces filtres sont généralement employés en transmission. Ils sont fréquemment combinés avec les filtres de la première catégorie pour assurer des filtres de blocage destinés à éliminer les pics secondaires de transmission.

Les filtres appartenant à cette troisième catégorie sont par exemple les filtres en verre coloré par des cations métalliques (métaux de transition, terres rares), des colorants organiques en solution, ou dans des gels, ou dans des films de matière plastique, ou encore des filtres à vapeurs métalliques ou à vapeur d'iode, ou bien des filtres contenant des particules d'un diamètre déterminé en suspension...

Quelle que soit la catégorie des filtres, ils se caractérisent tous par leur atténuation à la longueur d'onde du faisceau excitateur utilisé pour illuminer l'échantillon à analyser, leur coefficient de transmission dans le domaine spectral utile, et les limites et la pente de coupure de leur bande de coupure.

Le plus souvent, l'atténuation s'exprime sur une échelle logarithmique en densité optique DO (par exemple, une densité optique DO de 6 correspond à une atténuation d'un facteur de $10^6$). Le coefficient de transmission s'exprime quant à lui sur une échelle linéaire en % en fonction de la longueur d'onde ou du nombre d'ondes en $cm^{-1}$. Enfin, les limites et la pente de coupure de la bande de coupure associée à la densité optique de la région spectrale "coupée", déterminent la possibilité d'observer des raies de basse fréquence situées à des longueurs d'onde voisines de celles de la raie excitatrice.

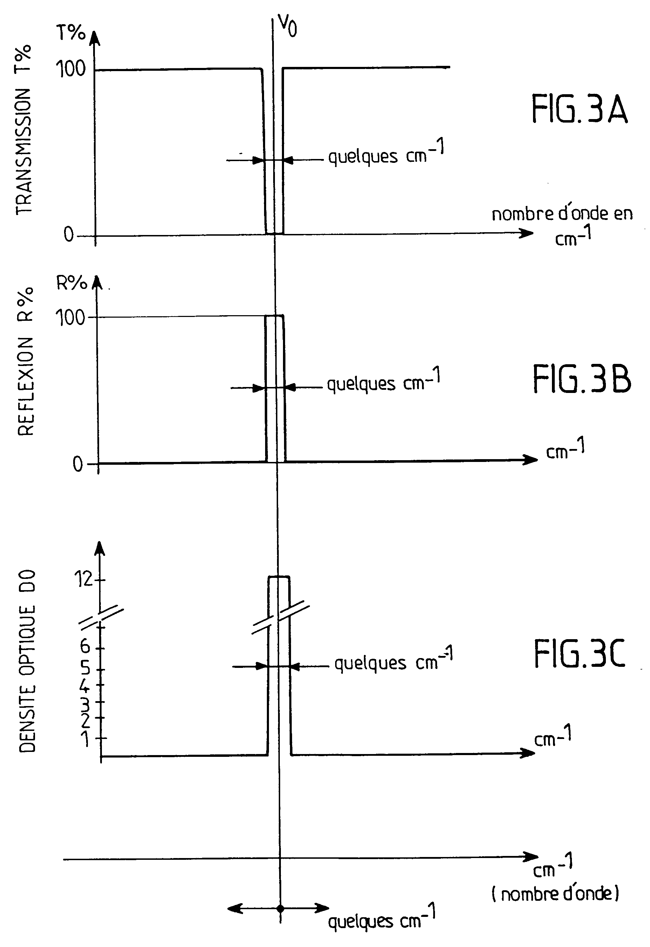

En référence aux figures 3A à 3C, le filtre idéal présenterait, pour la spectrométrie RAMAN ou de fluorescence, une réponse spectrale en réflexion complémentaire de celle en réflexion avec un coefficient de transmission de 100% et un coefficient de réflexion de 0%. Il devrait permettre à la fois une réjection de la raie excitatrice d'un facteur très élevé (par exemple d'une densité optique DO supérieure à 8 ou 10) en même temps que l'observation des très basses fréquences (par exemple les raies situées à environ quelques cm$^{-1}$ de part et d'autre de la raie excitatrice). Le filtre idéal devrait ainsi avoir une réponse spectrale quasi-symétrique par rapport à la raie excitatrice sur une bande spectrale très étroite (de quelques cm$^{-1}$) et avec une pente de coupure rigoureusement verticale. De plus, le filtre idéal devrait pouvoir ajuster sa valeur nominale sur quelques cm$^{-1}$ pour s'adapter à la fréquence exacte du faisceau d'illumination dans la mesure où les sources d'illumination ont parfois une fréquence qui varie de quelques cm$^{-1}$ suivant la fabrication. Enfin, il n'aurait aucune absorption hors de la bande de coupure (coefficients de transmission et de réflexion rigoureusement constants dans tout le domaine spectral de l'ultra-violet à l'infrarouge).

Or, un tel filtre idéal est actuellement difficilement réalisable et en outre de mise en oeuvre coûteuse.

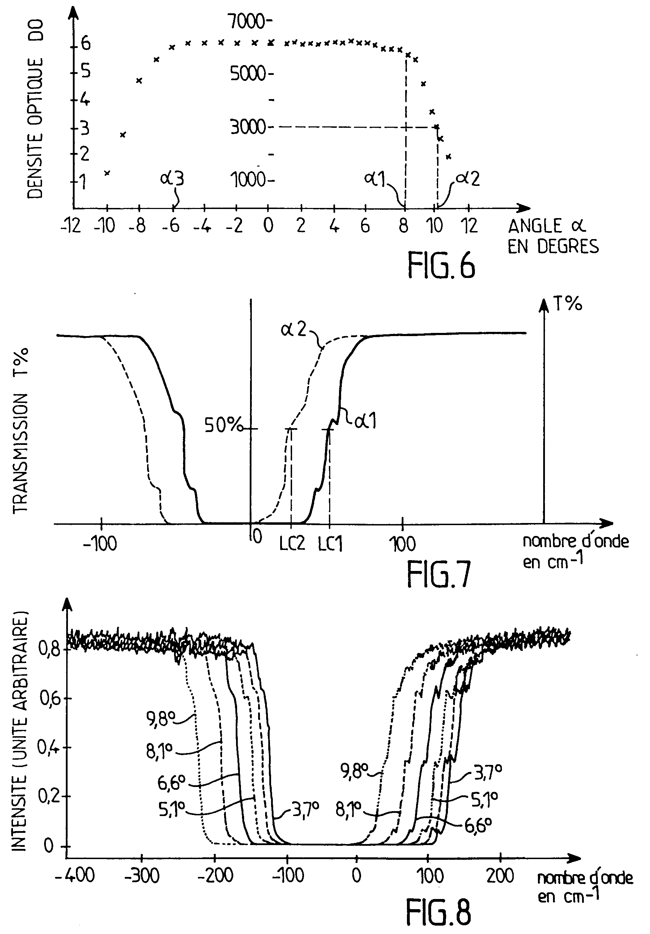

De plus, lorsque l'homme de l'art souhaite détecter les basses fréquences avec un seul filtre, il accepte généralement un compromis entre les limites de coupure de la bande de coupure et la valeur de la densité optique puisque la limite de coupure se rapproche de la raie excitatrice lorsque l'angle d'incidence du filtre augmente mais la densité optique diminue lorsque ledit angle d'incidence augmente. Ainsi, avec un seul filtre, l'homme de l'art ne peut trouver qu'un seul angle optimal pour chaque sorte d'échantillon. Il en résulte qu'il doit effectuer autant d'ajustement précis de l'angle d'incidence du filtre que de sortes d'échantillon à analyser, ce qui alourdit et complique l'analyse comme on le verra plus en détail en référence à la figure 5A.

La présente invention apporte une solution à ces problèmes.

Elle vise donc à fournir une optimisation de la position et de la largeur de la bande de coupure d'un dispositif de filtrage optique en vue de se rapprocher des performances du filtre idéal en faisant néanmoins appel à des filtres optiques couramment disponibles sur le marché.

Ainsi, elle porte sur un dispositif d'optimisation de la position et de la largeur de la bande de coupure d'un dispositif de filtrage optique comprenant un premier filtre optique ayant une réponse spectrale en transmission complémentaire de celle en réflexion et apte, d'une part, à recevoir un faisceau d'illumination et l'injecter sur un échantillon, et, d'autre part, à recevoir la lumière émise par l'échantillon ainsi illuminé, et la diriger vers des moyens d'analyse après filtrage, et un second filtre optique intercalé entre le premier filtre et les moyens d'analyse.

Selon une définition générale de l'invention, le premier filtre est incliné d'un angle d'incidence dont la valeur est ajustée pour rapprocher la limite de coupure du premier filtre vers l'un des côtés de la raie du faisceau d'illumination, ce qui diminue la densité optique du premier filtre, tandis que l'association des premier et second filtres permet d'obtenir un filtrage du type passe-haut dont la densité globale correspond à la somme des densités des premier et second filtres et dont la limite de coupure est plus basse que celle obtenue par un seul filtre incliné à son angle optimal.

Ainsi, en augmentant la valeur de l'angle d'incidence du premier filtre, la bande de coupure du dispositif de filtrage se déplace dans le spectre et la limite de coupure (à mihauteur par exemple) se rapproche d'un côté de la raie excitatrice. Toutefois, ce rapprochement s'effectue au détriment de la densité optique du premier filtre qui diminue. Pour compenser cette diminution, les premier et second filtres sont mis en série et leurs caractéristiques de filtrage se combinent astucieusement selon l'invention pour obtenir une densité optique globale élevée désirée permettant de supprimer la raie excitatrice.

L'enrichissement qu'apporte la présente invention à l'état de la technique n'est pas ici la mise en série de deux ou plusieurs filtres qui est connue depuis longtemps, mais une manière astucieuse d'optimiser le couplage des filtres pour étendre la zone spectrale utilisable vers les basses fréquences.

L'optimisation du couplage entre les premier et second filtres a l'avantage en outre de permettre une compensation des modulations de signal susceptibles d'intervenir dans la transmission des raies utiles.

En pratique, il est prévu d'incliner aussi le second filtre d'un second angle d'incidence pour rapprocher la limite de coupure du second filtre au moins jusqu'à la limite de coupure du premier filtre.

De façon surprenante, la Demanderesse a ainsi observé qu'en choisissant les valeurs optimales des angles d'incidence des premier et second filtres qui font que la somme des densités optiques desdits premier et second filtres atteint la valeur désirée pour supprimer la raie excitatrice, la zone spectrale utilisable vers les basses fréquences est plus étendue que celle obtenue avec un seul filtre incliné de façon optimale.

Un tel dispositif selon l'invention permet d'obtenir un filtrage de type passe-haut, ce qui empêche, par exemple en diffusion RAMAN, une analyse simultanée des raies Stokes et anti-Stokes (utiles par exemple pour la mesure précise de la température d'un échantillon).

Il convient de remarquer que l'inclinaison optimale d'un filtre unique pour chaque sorte d'échantillon selon l'art antérieur ne permet pas non plus, en raison de la largeur du filtre, de détecter simultanément les raies Stokes et anti-Stokes de basse fréquence.

La présente invention remédie également à ce problème.

Ainsi, elle porte également sur un dispositif d'optimisation de la position et de la largeur de la bande de coupure d'un dispositif de filtrage optique composé de premier et second étages de filtrage, un trajet d'illumination commun, et des premier et second trajets de collection montés en parallèle et aptes à se rejoindre selon un trajet de collection commun au niveau de moyens d'analyse, le premier étage comprenant au moins un filtre ayant une réponse spectrale en transmission complémentaire de celle en réflexion et propre à recevoir un faisceau d'illumination et l'injecter sur un échantillon, et, recevoir la lumière émise par l'échantillon ainsi illuminé, et diriger une première portion de celle-ci selon le premier trajet de collection, et une seconde portion de celle-ci complémentaire de la première vers le second étage de filtrage qui reçoit ladite seconde portion et la dirige après filtrage selon le second trajet de collection.

Selon une autre définition générale de l'invention, relevant du même concept inventif que celui de la définition de l'invention mentionnée ci-avant, le premier étage de filtrage comprend une association de filtres mis en série et agencés pour rapprocher la limite de coupure du premier étage d'un côté de la raie du faisceau d'illumination, et le second étage comprend au moins un filtre agencé pour rapprocher la limite de coupure du second étage de l'autre côté de la raie du faisceau d'illumination, ce qui permet d'obtenir au niveau du trajet de collection commun un filtrage du type coupe-bande dont les limites de coupure sont positionnées de part et d'autre de la raie d'illumination en vue d'une analyse optimale des raies de basse fréquence.

La Demanderesse a déjà proposé dans son Brevet FR-A-2726365 la séparation en deux ou plusieurs voies de filtrage traitées séparément, suivie d'une recombinaison sur un trajet optique commun dirigé vers l'analyseur spectral. Cette notion de filtrage en parallèle met à profit la propriété connue des filtres des première et seconde catégories décrites ci-avant, à savoir la complémentarité des réponses spectrales en transmission et en réflexion. La présente invention enrichit cet état de la technique en réalisant un couplage mixte "série-parallèle" de filtres dans une configuration optique qui permet de rapprocher les limites de coupure vers les basses fréquences, par exemple en RAMAN, à la fois pour la partie STOKES et pour la partie Anti-STOKES du spectre, ce qui jusque là n'était pas réalisable avec les filtres actuels.

Ainsi, grâce à l'invention, les performances du filtrage sont améliorées de façon spectaculaire, ce qui offre aux utilisateurs des possibilités d'applications plus étendues, sous forme d'un ensemble optique plus compact, plus stable et moins coûteux que les dispositifs de l'art antérieur.

En pratique, les filtres du premier étage sont inclinés selon un angle respectif choisi pour obtenir selon le premier trajet de collection un filtrage du type passe-haut dont la densité globale correspond à la somme des densités des filtres ainsi mis en série et dont la limite de coupure est plus basse que celle obtenue par un seul filtre incliné à son angle optimal.

Selon un autre aspect de l'invention, le filtre du second étage est incliné d'un angle d'incidence choisi pour obtenir un filtrage du type passe-haut selon le second trajet de collection et dont la densité et la limite de coupure sont choisies pour une analyse optimale des raies de basse fréquence.

Selon un mode préféré de réalisation de l'invention, le dispositif comprend en outre au moins un élément séparateur de faisceaux, de type semi-transparent, placé sur le trajet des faisceaux incidents et réfléchis sur un filtre du premier et/ou du second étage et agencé pour éviter l'obturation desdits faisceaux, ce qui permet d'incliner le filtre selon un angle d'incidence faible ou nul.

En pratique, le ou les filtres du premier étage sont fabriqués pour une coupure centrée sur la raie d'illumination tandis que le filtre du second étage est fabriqué pour une coupure centrée sur une raie différente de la raie d'illumination mais proche de celle-ci.

Par exemple, le ou les filtres ayant une réponse spectrale en transmission complémentaire de celle en réflexion comprennent des éléments optiques appartenant au groupe formé par les filtres de type Fabry-Perot, les filtres interférentiels à cavités multiples, les filtres multidiélectriques réalisés par des techniques de dépôt de couches minces, les filtres interférentiels de type LIPPMANN, les réseaux de phase en volume, les filtres holographiques dits NOTCHS, ou les filtres de BRAGG ou ASHER, les filtres à réseaux de phase en volume, les filtres à réseaux de diffraction plans ou concaves utilisés en configuration dispersive sous la forme de monochromateurs double ou analogues.

La présente invention a également pour objet un procédé d'optimisation de la position et de la largeur de la bande de coupure mis en oeuvre par le dispositif selon l'invention.

D'autres caractéristiques et avantages de l'invention apparaîtront à la lumière de la description détaillée ci-après et des dessins annexés dans lesquels :

- les figures 1A et 1B représentent les réponses spectrales en transmission et en réflexion de la première catégorie de filtres optiques de l'état de la technique ;

- les figures 2A et 2B représentent les réponses spectrales en transmission et en réflexion de la seconde catégorie de filtres optiques de l'état de la technique ;

- les figures 3A à 3C représentent les performances d'un filtre optique idéal pour la spectrométrie RAMAN ou de fluorescence;

- la figure 4 illustre un exemple de réalisation de l'optimisation d'un dispositif de filtrage comprenant un premier filtre appartenant à la seconde catégorie et un second filtre intercalé entre le premier filtre et des moyens d'analyse, l'inclinaison des premier et second filtres étant ajustée selon l'invention ;

- la figure 5A représente les différents spectres d'un échantillon de soufre obtenus selon différents angles d'inclinaison du premier filtre et la figure 5B représente de façon agrandie et avec une partie corrigée le spectre optimal du soufre obtenu avec une inclinaison du premier filtre d'un angle de 8,6°, la raie de plus basse fréquence étant à 49,3 cm$^{-1}$ de la raie excitatrice ;

- la figure 6 est une courbe montrant la variation de la densité optique d'un filtre en fonction de l'angle d'incidence, pour une longueur d'onde donnée ;

- la figure 7 représente des courbes de transmission pour un angle d'incidence de 8,1° et un angle d'incidence de 10,2° ainsi que les limites de coupure à mi-hauteur correspondante;

- la figure 8 représente les différentes courbes de transmission d'un filtre de la seconde catégorie en fonction de l'angle d'incidence du filtre ;

- la figure 9 est un spectre RAMAN du soufre qui illustre le résultat du couplage optimal des premier et second filtres selon l'invention montrant la détection des raies de basse fréquence, notamment la raie a 29,2 cm$^{-1}$ de la raie excitatrice, cette figure 9 étant à comparer à la figure 5B représentant le spectre du même produit mais avec un seul filtre incliné à son angle optimal;

- la figure 10A illustre schématiquement la limitation angulaire des filtres et la figure 10B illustre schématiquement l'utilisation d'une lame séparatrice neutre qui apporte une solution à cette limitation géométrique selon l'invention;

- la figure 11A représente schématiquement un autre exemple de réalisation d'un dispositif de filtrage optique avec deux étages de filtrage comprenant chacun deux filtres couplés de façon similaire à celle des premier et second filtres selon l'invention ;

- la figure 11B représente schématiquement une variante du dispositif décrit en référence a la figure 11A dans laquelle une lame séparatrice neutre remplace un miroir selon l'invention pour permettre l'inclinaison des filtres sans limitation géométrique ;

- la figure 11C représente schématiquement une autre variante du dispositif décrit en référence a la figure 11A dans laquelle une lame séparatrice neutre est placée sur le trajet de l'injection/réjection du faisceau laser selon l'invention;

- les figures 12A et 12B sont respectivement des courbes de réponse spectrale en transmission et en réflexion du premier étage dans lequel la bande de coupure est décalée d'un côté par rapport à la raie excitatrice selon l'invention ;

- les figures 13A et 13B sont respectivement des courbes des réponses en transmission et en réflexion du second étage dans lequel la bande de coupure est décalée de l'autre côté par rapport à une raie proche de la raie excitatrice selon l'invention; et

- les figures 14A et 14B sont respectivement des courbes de réponse en transmission et en réflexion du couplage optimal des éléments optiques décrits en référence aux figures 11A, 11B ou 11C.

Les dessins comportent pour l'essentiel des éléments de caractère certain. A ce titre, ils pourront non seulement aider à la compréhension de l'invention mais aussi le cas échéant contribuer à la définition de celle-ci.

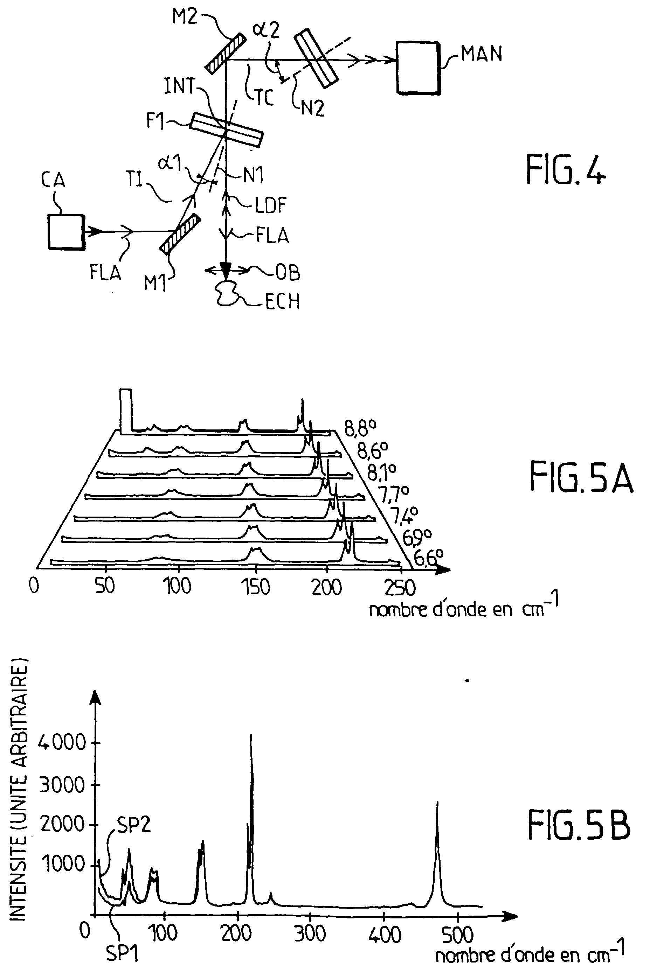

En référence à la figure 4, un dispositif de filtrage, destiné à être utilisé en particulier mais non limitativement en spectrométrie RAMAN, comprend une source laser LA qui éclaire ici un échantillon ECH qui émet une lumière dont le spectre est caractéristique dudit échantillon. Un trajet optique d'illumination TI est prévu entre la source LA et l'échantillon ECH placé sous un objectif OB. Des moyens d'analyse et/ou de détection MAN sont prévus pour détecter la lumière émise LDF. Un trajet optique de collection TC est également prévu entre l'échantillon ECH et les moyens d'analyse MAN.

Les trajets de collection TC et d'illumination TI se coupent en un point d'intersection INT sur lequel est disposé un filtre injecteur/réjecteur F1 appartenant aux première ou seconde catégories de filtres optiques décrites ci-avant.

Le filtre F1 reçoit le faisceau d'illumination FLA issu des moyens d'illumination LA et l'injecte par réflexion vers l'échantillon ECH selon le trajet d'illumination TI.

Dans le sens optique inverse, le filtre F1 reçoit la lumière émise LDF provenant de l'échantillon ECH selon le trajet de collection TC, transmet dans le trajet de collection TC la lumière émise utile et va rejeter la lumière excitatrice dudit trajet de collection TC.

Le filtre F1 est incliné d'un angle d'incidence $\alpha_1$ par rapport à la normale N1 aux faisceaux FLA et LDF.

Un second filtre F2 est intercalé entre le filtre F1 et les moyens d'analyse MAN selon le trajet de collection TC. Le filtre F2 appartient à l'une quelconque des première à troisième catégories décrites ci-avant. Le filtre F2 a une densité optique DO2 et une bande de coupure BS2 choisies pour améliorer la réjection de la lumière parasite (ici la lumière excitatrice). Il joue donc le rôle de bloquer la lumière parasite émise éventuellement par le filtre F1. Il est utilisé ici en transmission selon le trajet de collection TC.

Avantageusement (comme on le verra plus en détail ci-après), le filtre F2 est aussi incliné d'un angle

d'incidence $\alpha_2$ par rapport à la normale N2.

Des miroirs M1 et M2 participent le cas échéant a l'acheminement des faisceaux selon les trajets d'illumination et de collection.

Le dispositif de filtrage décrit en référence à la figure 4 peut avoir d'autres modes de réalisation. Par exemple, le filtre F1 peut aussi injecter le faisceau FLA vers l'échantillon par transmission et rejeter la lumière parasite par réflexion. Le sens de l'injection/réjection des faisceaux n'est pas essentiel puisque ce qui est essentiel ici c'est la complémentarité des réponses spectrales du filtre F1 en réflexion et en transmission.

En référence à la figure 5A, on voit que les spectres d'un échantillon de soufre varient selon l'angle d'inclinaison du filtre F1. Le spectre optimal du soufre (c'est à dire avec des raies de basse fréquence analysables) est obtenu avec une inclinaison du filtre d'un angle de 8,6°. Lorsque l'angle est supérieur à 8,6° l'atténuation de la raie excitatrice est insuffisante tandis que lorsque l'angle est inférieur à 8,6°, les raies de basses fréquences sont très affaiblies et par conséquent indiscernables.

La variation de la densité optique (figure 6) en fonction de l'angle exprime la qualité intrinsèque du filtre et explique les résultats des différents spectres de la figure 5A. Par exemple, la densité optique du filtre F1 de type NOTCH, mesurée en lumière monochromatique pour une raie laser de longueur d'onde $\lambda_0$, par exemple 632,8 nm, varie en fonction de l'angle d'incidence $\alpha$ selon une courbe présentant un plateau. Par exemple, la densité optique de 6 est pratiquement constante dans une plage allant de -6 ($\alpha_3$) a 8° ($\alpha_1$). Par exemple, une densité optique DO de 3 correspond à un angle de 10,5° ($\alpha_2$).

Les figures 7 et 8 montrent que la bande de coupure du filtre F1 se déplace en fonction de l'angle $\alpha$. L'échelle en nombre d'onde est ici centrée sur la raie excitatrice laser à 623,8 nm. Le déplacement de la bande de coupure est manifeste lorsque l'angle d'incidence varie de 9,8° à 3,7° (figure 8).

En référence a la figure 7, la réponse spectrale en transmission d'un filtre ayant un angle d'incidence de 8,1°($\alpha_1$) et une densité optique DO de 6 présente une limite de coupure à mihauteur LC1 avec une pente raide à environ 50 cm$^{-1}$ de la raie excitatrice tandis qu'un filtre ayant un angle d'incidence de 10,5°($\alpha_2$) et une densité optique DO de 3 présente une limite de coupure à mihauteur LC2 avec une pente raide à environ 20 cm$^{-1}$ de la raie excitatrice. En augmentant la valeur de l'angle d'incidence du filtre F1, la limite de coupure à mihauteur se rapproche donc de la raie excitatrice mais la densité optique diminue.

La Demanderesse a observé qu'au lieu d'utiliser un seul filtre ayant une forte densité optique pour la raie excitatrice mais des limites de coupure hautes, c'est à dire relativement éloignées de ladite raie excitatrice, il convient d'utiliser selon l'invention deux filtres ayant une densité optique respective plus faible mais avec une limite de coupure plus basse, ces deux filtres ainsi associés étant équivalent à un filtre qui aurait une densité optique élevée (ici 6) et une limite de coupure basse (par exemple a 20 cm$^{-1}$ de la raie excitatrice à mi-hauteur).

La Demanderesse a appliqué ces observations à l'appareil de spectrométrie décrit en référence à la figure 4 à laquelle on fait de nouveau référence.

Selon l'invention, le premier filtre F1 est incliné d'un angle d'incidence $\alpha_1$ dont la valeur est ajustée pour rapprocher la limite de coupure du premier filtre vers l'un des côtés de la raie du faisceau d'illumination FLA. Cet ajustement diminue la densité optique du premier filtre, tandis que l'association des premier et second filtres F1 et F2 permet d'obtenir un filtrage du type passe-haut dont la densité globale correspond à la somme des densités des premier et second filtres et dont la limite de coupure est plus basse que celle obtenue par un seul filtre incliné à son angle optimal.

On ajuste la valeur de $\alpha_1$ en fonction des densités optiques DO1 et DO2 et des limites de coupure des filtres F1 et F2 de telle sorte que le dispositif de filtrage dans son ensemble est du type passe-haut avec une densité optique globale correspondant à la somme des densités optiques individuelles des filtres F1 et F2 et une bande de coupure dont la position et la largeur sont ajustées pour être compatibles avec une analyse spectrale optimale de l'échantillon.

Par exemple, on choisit la valeur de 10,5° pour $\alpha_1$ et une densité optique DO1 de 3.

En pratique, les caractéristiques de filtrage du filtre F2 sont celles des filtres des première a troisième catégories décrites ci-avant.

De préférence, le filtre F2 est aussi un filtre du type notch de la seconde catégorie. Dans cet exemple avantageux mais non limitatif, le filtre F2 est alors également incliné d'un angle $\alpha_2$ (avec $\alpha_2$ au moins sensiblement égal à $\alpha_1$) pour rapprocher la limite de coupure de sa bande de coupure vers la raie excitatrice au moins jusqu'à la limite de coupure à mi-hauteur du premier filtre F1. L'angle $\alpha_2$ peut aussi être différent de $\alpha_1$ mais la largeur de la bande de coupure du filtre F2 doit être inférieure ou égale à la largeur du filtre F1, ce qui se traduit par un angle $\alpha_2$ au moins égal à $\alpha_1$ dans le cas où les filtres F1 et F2 sont des filtres notch sensiblement identiques.

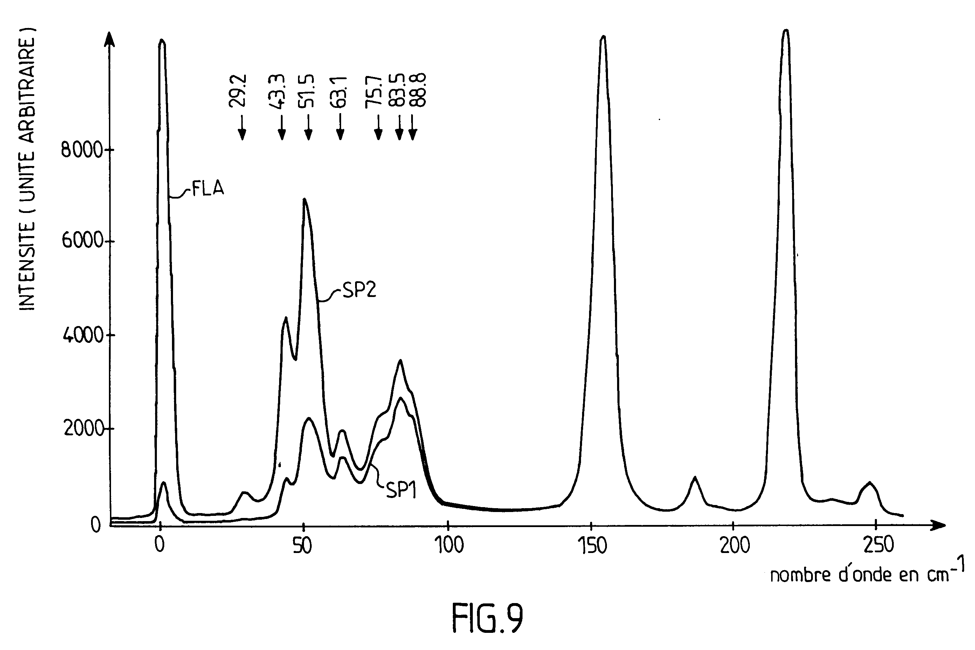

En référence à la figure 9, le spectre obtenu par le dispositif de filtrage dans son ensemble (filtres F1 et F2) pour un échantillon du type soufre comprend des raies de basses fréquences à 29,2 ; 43,3 ; 51,5 ; 63,1 cm$^{-1}$,... de la raie excitatrice. Le spectre SP2 correspond à un spectre corrigé tandis que le spectre SP1 correspond à un spectre non corrigé de la transmission du filtre. Il convient de remarquer qu'avec un seul filtre, le meilleur spectre (figure 5B) est obtenu avec un angle de 8,6°, et ne permet qu'une détection relativement affaiblie des raies 51,5 et 43,3 cm$^{-1}$.

Il est à remarquer que l'optimisation du filtrage selon l'invention est fondée sur l'additivité des densités optiques des deux filtres (ou plus) qui permet ainsi de réaliser un taux de réjection désiré à la longueur d'onde de la raie excitatrice et sur le produit des transmissions qui permet ainsi de régler la pente et la limite de coupure de la bande de coupure près de la raie excitatrice.

Il convient d'observer que l'optimisation de la position et de la largeur de la bande de coupure du dispositif de filtrage constitué par les filtres F1 et F2 est réalisée selon l'invention en fonction de la densité optique désirée. Ainsi, selon l'invention, Il n'y a plus à optimiser le filtrage en fonction de l'échantillon comme dans le cas d'un filtre utilisé seul.

L'optimisation de la position et de la largeur de la bande de coupure des filtres F1 et F2 peut être réalisée selon un asservissement mécanique, piézoélectrique ou électromécanique des angles $\alpha_1$ et/ou $\alpha_2$ (dans le cas où les caractéristiques de filtrage du second filtre F2 varient aussi en fonction de l'angle d'incidence). L'asservissement peut s'effectuer selon une loi prédéterminée de manière à choisir la limite en basse fréquence. Cette loi peut être établie empiriquement en fonction des imperfections constatées sur les réponses des filtres réels. Ceci est particulièrement intéressant si l'on souhaite utiliser plusieurs filtres de types et/ou d'angles d'inclinaison différents.

Il est à remarquer que le nombre de filtres en série n'est limité que par la transmission des filtres. Il peut donc être supérieur à 2. L'association des filtres mis en série peut être formée de filtres de différents types.

Par exemple, il est possible d'associer un filtre F1 de type NOTCH holographique en transmission avec un filtre F2 de type NOTCH interférentiel en réflexion ou vice et versa.

Une autre association possible peut consister en un filtre F1 de type BRAGG ou ASHER avec un filtre F2 de type réseau dispersif, ou bien encore un filtre F1 de type interférentiel avec un filtre F2 à absorption.

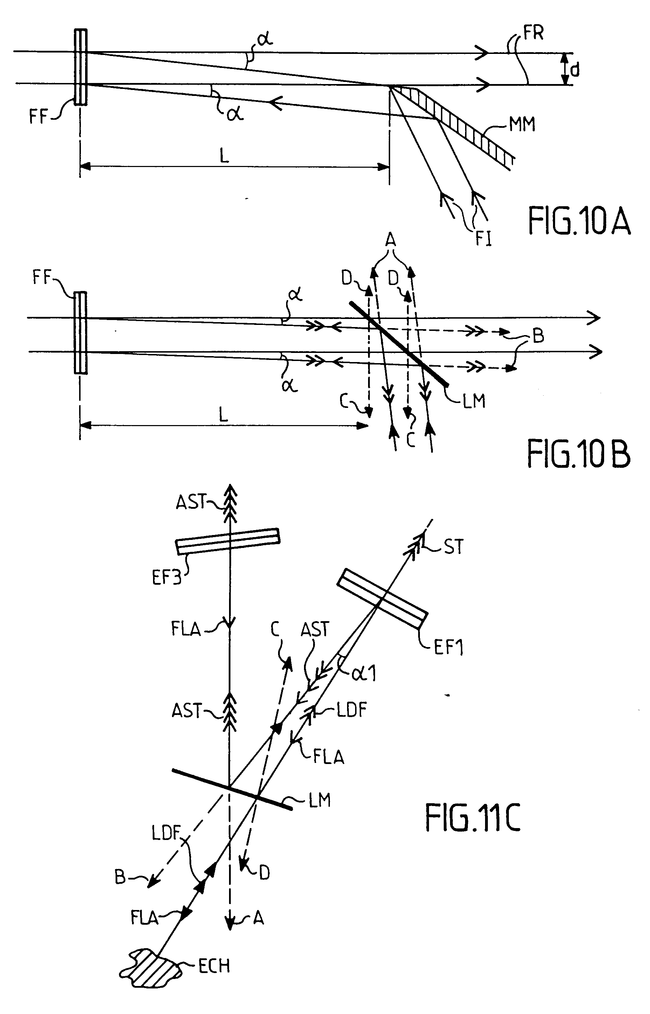

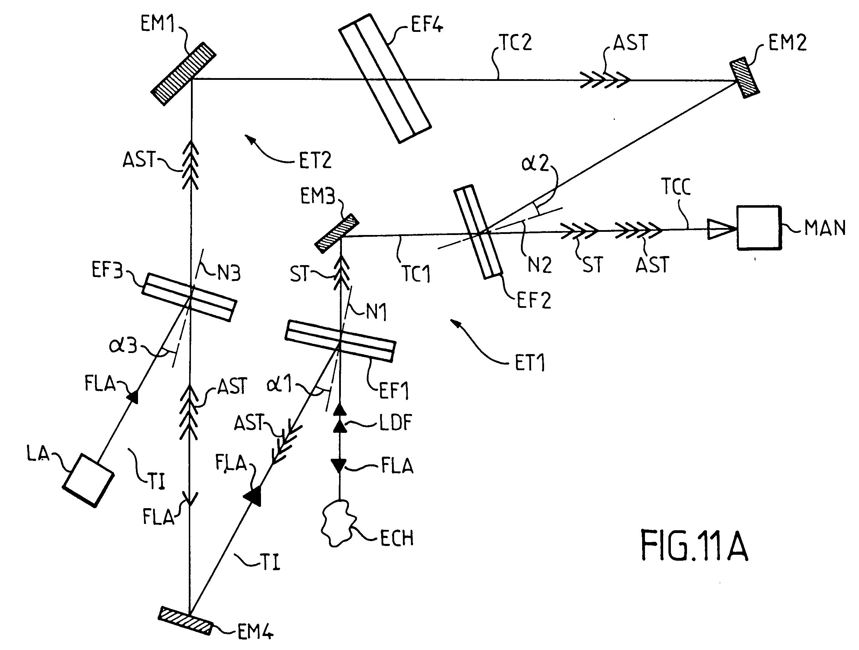

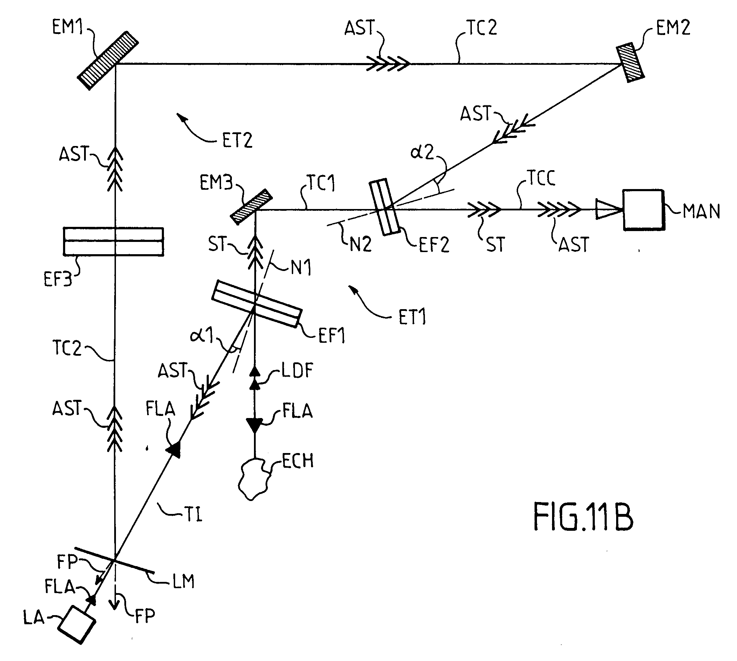

En référence à la figure 10A, l'angle d'incidence minimum du filtre $\alpha$ est limité géométriquement à cause du recouvrement partiel des faisceaux incident FI et réfléchi FR. Par exemple pour des faisceaux incident et réfléchi ayant chacun un diamètre d, se recoupant à une distance L du filtre FF, la condition suivante:

$$\sin \alpha \geq \frac{d}{L}$$

doit être respectée pour éviter une obturation partielle par le miroir de renvoi MM.

La Demanderesse a remarqué que la limitation en pratique des angles d'incidence sur les filtres utilisés en réflexion, due au recouvrement des faisceaux incident et réfléchi, constitue un inconvénient majeur puisque l'angle optimal tel que défini selon l'invention peut être inférieur à cette limite pour des filtres commercialement disponibles.

En référence à la figure 10B, le miroir de renvoi MM est remplacé par une séparatrice semi-transparente neutre LM. Grâce à cette lame séparatrice, l'angle d'incidence $\alpha$ sur le filtre FF peut prendre n'importe quelle valeur, sans limitation, y compris la valeur zéro si les propriétés du filtre l'exigent. De plus, la distance filtre/lame séparatrice L peut être beaucoup plus courte, ce qui améliore la compacité de l'installation.

Il est à remarquer que les pertes d'énergie dues aux faisceaux partiellement transmis A et B ou partiellement réfléchis C ou D par la lame séparatrice LM sont acceptables en pratique dans la mesure où les sources laser offrent généralement une puissance supérieure à la puissance nécessaire à une excitation correcte en dessous du seuil de dégradation thermique ou photochimique de l'échantillon examiné.

En référence à la figure 9, le spectre montre que seules les très basses fréquences du côté Stokes ou anti-Stokes du spectre Raman du soufre peuvent être analysées par les moyens d'analyse spectral du dispositif décrit en référence à la figure 4 (filtre passe-haut).

La Demanderesse fournit une solution à ce problème grâce à une optimisation d'un dispositif de filtrage capable de laisser passer toutes les basses fréquences dans le trajet de collection, c'est-à-dire celles dites Stokes mais aussi celles dites anti-Stokes.

Cette solution selon l'invention est basée sur la mise en parallèle de deux étages dont le premier comprend au moins deux filtres agencés de façon similaire aux filtres F1 et F2 décrits ci-avants, pour permettre le passage des raies de basse fréquence situées d'un côté de la raie excitatrice (raies STOKES par exemple) et dont le second comprend au moins un filtre permettant le passage des raies de basse fréquence situées de l'autre côté de la raie excitatrice (raies ANTISTOKES par exemple), les faisceaux issus des premier et second étages étant recombinés pour être acheminés vers l'analyseur spectral.

En référence à la figure 11A, les deux étages ET1 et ET2 sont sensiblement similaires à l'ensemble formé par les filtres F1 et F2 décrits en référence à la figure 4.

Les étages ET1 et ET2 sont montés en parallèle et possèdent un trajet d'illumination commun TI et des premier et second trajets de collection TC1 et TC2 disposés en parallèle et aptes à se rejoindre selon un trajet de collection commun TCC au niveau de moyens d'analyse MAN.

Le premier étage de filtrage ET1 comprend un filtre optique EF1 ayant une densité optique DO1 à la longueur d'onde du faisceau d'illumination, une bande de coupure BS1 ainsi qu'une réponse spectrale en réflexion complémentaire de celle en transmission. Il appartient aux première ou seconde catégorie décrites précédemment.

Le filtre EF1 reçoit un faisceau d'illumination FLA selon le trajet d'illumination commun TI et l'injecte vers un échantillon ECH, et reçoit la lumière émise LDF par l'échantillon ainsi illuminé. Le filtre EF1 dirige par transmission une première portion ST de la lumière émise LDF vers les moyens d'analyse MAN. Compte tenu de sa réponse spectrale en transmission complémentaire de celle en réflexion, le filtre EF1 dirige par réflexion une seconde portion AST de la lumière émise LDF complémentaire de la première ST vers le second étage ET2. Par exemple, la première portion ST comprend au moins les raies STOKES du spectre RAMAN tandis que la seconde portion comprend au moins les raies ANTISTOKES du spectre RAMAN.

Le premier étage ET1 comprend aussi un filtre optique EF2 intercalé entre le filtre EF1 et les moyens d'analyse MAN. Le filtre EF2 a une densité optique DO2 a la longueur d'onde du faisceau d'illumination, et une bande de coupure BS2 choisies pour améliorer la réjection de la lumière inutile à l'analyse. En pratique la largeur de la bande BS2 est inférieure ou égale à celle du filtre EF1. Le filtre EF2 appartient à l'une des première à troisième catégories décrites précédemment.

Le second étage de filtrage ET2 comprend un filtre optique EF3 ayant une densité optique DO3 et une bande de coupure BS3. Pour faciliter le décalage des bandes de coupure que l'on décrira plus en détail ci-après, le filtre EF3 est conçu pour couper, avec une densité élevée, à une longueur d'onde $\lambda_1$ différente mais proche de celle du faisceau d'illumination $\lambda_0$ ce qui se traduit par une bande de coupure BS3 centrée par exemple à 100 cm$^{-1}$ de la raie du faisceau d'illumination FLA.

Le filtre EF3 reçoit le faisceau d'illumination FLA issu de la source LA et le dirige par réflexion vers le filtre EF1 selon le trajet d'illumination commun. Il reçoit aussi la seconde portion AST de la lumière émise par l'échantillon et la dirige, par transmission et après filtrage, vers les moyens d'analyse MAN selon le second trajet de collection TC2.

Le second étage ET2 comprend le cas échéant (figure 11A) un filtre optique EF4 intercalé entre le filtre EF3 et les moyens d'analyse MAN selon le second trajet de collection TC2. Le filtre EF4 a une densité optique DO4, et une bande de coupure BS4 choisies pour améliorer la réjection de la lumière parasite selon le second trajet de collection TC2.

Le second étage ET2 (le filtre EF3 en figure 11A) reçoit la portion de la lumière AST rejetée par réflexion par le filtre EF1, et la transmet, après filtrage, dans le second trajet de collection TC2.

En référence à la figure 11B, une lame séparatrice LM, décrite en référence a la figure 10B, remplace le miroir EM4 décrit en référence a la figure 11A pour permettre d'orienter à volonté et sans limitation d'angle, le filtre EF3 qui n'est utilisé ici qu'en transmission.

L'injection du faisceau laser FLA est réalisée par le séparateur de faisceaux LM du type lame semi-transparente qui réfléchit le faisceau d'illumination FLA vers le premier étage ET1 selon le trajet d'illumination commun TI. Le séparateur de faisceaux reçoit (dans la direction opposée à l'injection) la seconde portion AST de la lumière émise par l'échantillon selon le trajet d'illumination commun et la dirige, par réflexion et sans filtrage, vers le filtre EF3 intercalé entre l'élément séparateur LM et les moyens d'analyse MAN selon le second trajet de collection TC2. Les faisceaux partiellement transmis FP par la lame LM sont perdus pour l'analyse. Ils sont représentés en traits tiretés en référence à la figure 11B.

Grâce à cette lame séparatrice LM, la limitation géométrique concernant l'inclinaison du filtre EF3 est supprimée puis-qu'une telle lame évite l'obturation des faisceaux incidents et réfléchis. Le filtre EF3 peut donc être incliné d'un angle d'incidence faible, de l'ordre de quelques degrés voir même nul.

En référence à la figure 11C, une lame séparatrice LM, comme celle décrite en référence a la figure 10B remplace le miroir de renvoi EM4 décrit en référence a la figure 11A et l'échantillon ECH est placé a l'endroit où est disposé la source LA en référence à la figure 11B. Dans cette configuration, le filtre EF1 peut fonctionner à des angles inférieurs à la limite géométrique mentionnée ci-avant. Les pertes d'énergie dues aux faisceaux partiellement transmis A et B ou partiellement réfléchis C ou D par la lame séparatrice LM sont représentés en traits tiretés comme en référence à la figure 10B.

Le séparateur de faisceaux LM du type lame semi-transparente joue deux rôles, l'un réflecteur, l'autre transmetteur.

En ce qui concerne le rôle de réflecteur de faisceaux, le séparateur LM réfléchit le faisceau d'illumination FLA vers le premier étage ET1 selon le trajet d'illumination commun TI. Le séparateur de faisceaux reçoit (dans la direction opposée à l'injection) la seconde portion AST de la lumière émise par l'échantillon selon le trajet d'illumination commun et la dirige, par réflexion et sans filtrage, vers le filtre EF3 intercalé entre l'élément séparateur LM et les moyens d'analyse MAN selon le second trajet de collection TC2.

En ce qui concerne le rôle de transmetteur de faisceaux, le séparateur de faisceaux LM transmet le faisceau d'illumination FLA issu du filtre EF1 vers l'échantillon ECH selon le trajet d'illumination commun TI. Le séparateur de faisceaux reçoit (dans la direction opposée à l'injection) la lumière LDF émise par l'échantillon selon le trajet d'illumination commun et la dirige, par transmission et sans filtrage, vers le filtre EF1.

Il convient de remarquer que l'utilisation d'une lame séparatrice neutre a, selon l'invention, un caractère général qui s'applique à de nombreuses configurations optiques en vue d'éviter l'obturation des faisceaux incidents/réfléchis sur les filtres.

On fait de nouveau référence aux figures 11A ou 11B. Pour recombiner la partie anti-Stokes AST transmise par le filtre EF3 (via le filtre EF4 comme en figure 11A, sans filtre EF4 comme en figure 11B) avec la partie Stokes ST transmise par le filtre EF1 (via le filtre EF2), il est possible d'utiliser des miroirs EM1, EM2, EM3, EM4 (figure 11A) et le filtre EF2. Par exemple, le miroir EM2 réfléchit le faisceau anti-Stokes AST sur la face arrière du filtre EF2. Les deux faisceaux AST et ST ainsi recombinés sont envoyés ensuite vers l'analyseur spectral MAN. En variante, il est possible d'utiliser un modulateur tournant (non représenté) monté sur le trajet de collection TC1 et qui transmet alternativement les raies AST et ST vers les moyens d'analyse.

Selon l'invention, les filtres EF1 et EF3 sont agencés pour rapprocher la limite de coupure (à mi-hauteur) de la bande de coupure BS1 d'un côté de la raie excitatrice et rapprocher la limite de coupure (à mi-hauteur) de la bande de coupure BS3 de l'autre côté de la raie excitatrice.

La valeur des angles des filtres EF1, EF2, et EF3 (et EF4 le cas échéant) est ajustée en fonction des densités optiques et des limites de coupure des filtres constituant les premier et second étages ET1 et ET2 de telle sorte que le dispositif de filtrage dans son ensemble est du type coupe bande avec une densité optique correspondant à celle de chaque étage et une bande de coupure dont les limites de coupure sont positionnées de part et d'autre de la raie d'illumination et compatibles avec une analyse spectrale optimale de l'échantillon.

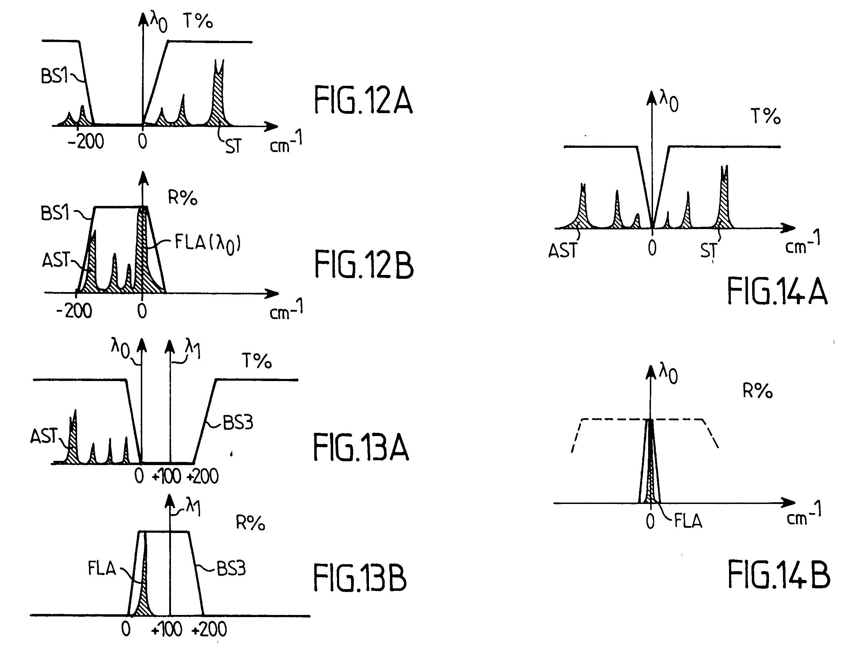

En référence aux figures 12A à 14B, on va illustrer un exemple de réalisation d'une telle optimisation de la largeur et de la position de la bande de coupure d'un filtre coupe-bande selon l'invention.

En référence aux figures 12A et 12B, le filtre EF1 appartient par exemple à la seconde catégorie. Il est conçu pour couper avec une bonne atténuation à la longueur d'onde du faisceau d'illumination. Selon l'invention, il est agencé (incliné) pour que sa bande de coupure BS1 contiennent à la fois la raie excitatrice et une partie AST du spectre Anti Stokes (fréquences négatives en $cm^{-1}$). La densité optique DO1 est par exemple égale à 3. L'angle d'incidence du filtre EF1 est par exemple de l'ordre de 10,5°. La largeur de la bande de coupure BS1 est de l'ordre de 200 $cm^{-1}$.

Il convient de remarquer que la bande de coupure BS1 n'est plus centrée sur la longueur d'onde $\lambda_0$ correspondant à la raie excitatrice (origine en nombre d'onde de l'axe des abscisses), mais légèrement décalée vers la région anti-Stokes AST à cause de l'ajustement de l'angle du filtre EF1 et du choix de la densité optique DO1 à la longueur d'onde de la raie excitatrice.

Ce décalage de la bande de coupure BS1 permet ainsi de laisser passer en transmission les raies Stokes ST du spectre RAMAN de l'échantillon analysé et de réfléchir les raies anti-Stokes AST du spectre RAMAN et la raie excitatrice FLA vers le second étage.

Le filtre EF1 transmet donc les raies Stokes ST vers les moyens d'analyse MAN et réfléchit vers le second étage à la fois la radiation excitatrice FLA et la partie basse fréquence du spectre Raman anti-Stokes AST, typiquement à 200 $cm^{-1}$ de la raie excitatrice.

Le filtre EF2 reçoit les raies ST pour les filtrer par transmission. Par exemple, le filtre EF2 appartient à la même catégorie que le filtre EF1. Le filtre EF2 a par exemple une densité optique égale ou supérieure à 3.

L'angle d'incidence du filtre EF2 est par exemple de l'ordre de 10,5°. C'est l'additivité des densités optiques des filtres EF1 et EF2 qui permet ici d'atténuer fortement la raie excitatrice.

En référence aux figures 13A et 13B, le filtre EF3 appartient par exemple à la seconde catégorie. Il est conçu pour couper avec une bonne atténuation à une longueur d'onde $\lambda_1$ différente de celle $\lambda_0$ du faisceau d'illumination, mais proche de celle-ci. Selon l'invention, il est agencé (incliné) pour que sa bande de coupure BS3 coupe à la fois la raie excitatrice et une partie du spectre STOKES ST mais laisse passer les raies antistokes AST. L'angle d'incidence du filtre EF3 est par exemple de l'ordre de 10° dans le cas de la figure 11A ou proche de 0 dans le cas de la figure 11B.

La bande de coupure BS3 du filtre EF3 n'est pas centrée sur la longueur d'onde correspondant à la raie excitatrice $\lambda_0$ (0 sur l'échelle des fréquences), mais légèrement décalée par exemple vers la région STOKES (fréquences positives en $cm^{-1}$). Ce décalage de la bande de coupure BS3, (par exemple de 100 $cm^{-1}$) permet de laisser passer en transmission les raies anti-Stokes AST du spectre RAMAN de l'échantillon analysé vers les moyens d'analyse selon le second trajet de collection TC2 et de filtrer la raie excitatrice avec une forte atténuation. Ainsi, la raie excitatrice FLA n'est pas transmise par le filtre EF3.

Le cas échéant, le filtre EF4 (figure 11A) reçoit le faisceau AST issu du filtre EF3 et atténue encore si nécessaire la raie excitatrice FLA par transmission. Par exemple, le filtre EF4 appartient à la même catégorie que le filtre EF3. Le filtre EF4 a par exemple une densité optique égale ou plus à 3 et un angle d'incidence de l'ordre de 10° ou moins. Il est à remarquer que le filtre EF4 n'est pas indispensable lorsque le filtre EF3 a une densité optique suffisante pour atténuer la raie excitatrice.

En référence aux figures 14A et 14B, la combinaison des bandes de coupure BS1 et BS3 permet de collecter et détecter les raies stokes ST et les raies antistokes AST, tout en atténuant très fortement la raie excitatrice FLA. Par exemple, la densité globale du dispositif de filtrage est au moins égale à 6 pour le premier étage (DO1+DO2=3+3=6 ) et le second étage (DO3=6).

L'ajustement des angles des filtres est réalisé d'une façon similaire à celle des angles des filtres F1 et F2 décrit en référence à la figure 4.

Il convient de remarquer que l'optimisation de la position et de la largeur des bandes de coupure des filtres utilise ici avantageusement le fait que les filtres EF1 et EF2 sont fabriqués pour une coupure d'une raie excitatrice à $\lambda_0$ tandis que les filtres EF3 et EF4 (le cas échéant) sont fabriqués pour une coupure d'une raie excitatrice $\lambda_1$ différente de la raie à $\lambda_0$ mais proche de celle-ci, par exemple à + ou - 100 $cm^{-1}$. Cette différence dans le choix des filtres (avantageuse mais pas limitative) associée à l'ajustement de l'inclinaison des angles desdits permet d'obtenir le gabarit de filtrage désiré selon l'invention.

Le dispositif de filtrage décrit en référence aux figures 11A, 11B ou 11C peut avoir d'autres modes de réalisation. Par exemple, le filtre EF1 peut aussi diriger le faisceau FLA vers l'échantillon par réflexion et diriger le faisceau LDF vers les moyens d'analyse par transmission. Le sens de l'injection/réjection des faisceaux n'est pas essentiel puisque ce qui est essentiel ici c'est la complémentarité des réponses spectrales des filtres EF1 et EF3 en réflexion et en transmission.

Avantageusement, l'appareil de spectrométrie décrit en référence aux figures 4, 11A, 11B ou 11C est associé à des moyens expanseurs du faisceau d'illumination et à des moyens de filtrage spatial disposés conformément au brevet de la Demanderesse EP0535753 (dont la description fait partie intégrante de la présente demande à toutes fins utiles) afin d'obtenir des faisceaux d'illumination et de collection de même ouverture et améliorer encore les résolutions spectrale et spatiale de l'appareil. Les moyens de filtrage permettent ainsi d'assortir le diamètre du faisceau d'illumination ainsi expansé à la pupille de l'objectif du microscope sous lequel est placé l'échantillon.

## Revendications

1. Dispositif d'optimisation de la position et de la largeur de la bande de coupure d'un dispositif de filtrage comprenant un premier filtre optique (F1) ayant une réponse spectrale en transmission complémentaire de celle en réflexion et apte, d'une part, à recevoir un faisceau d'illumination (FLA) et l'injecter sur un échantillon (ECH), et, d'autre part, à recevoir la lumière émise par l'échantillon (ECH) ainsi illuminé, et la diriger vers des moyens d'analyse (MAN) après filtrage, et un second filtre optique (F2) intercalé entre le premier filtre (F1) et les moyens d'analyse (MAN),
caractérisé en ce que le premier filtre (F1) est incliné d'un angle d'incidence dont la valeur est ajustée pour rapprocher la limite de coupure du premier filtre vers l'un des côtés de la raie du faisceau d'illumination (FLA), ce qui diminue la densité optique du premier filtre, tandis que l'association des premier et second filtres permet d'obtenir un filtrage du type passe-haut dont la densité globale correspond à la somme des densités des premier et second filtres et dont la limite de coupure est plus basse que celle obtenue par un seul filtre incliné à son angle optimal.

2. Dispositif selon la revendication 1, caractérisé en ce que le second filtre (F2) est incliné d'un angle d'incidence dont la valeur est ajustée pour rapprocher la limite de coupure du second filtre au moins jusqu'à la limite de coupure du premier filtre.

3. Dispositif d'optimisation de la position et de la largeur de la bande de coupure d'un dispositif de filtrage composé de premier et second étages de filtrage (ET1, ET2), un trajet d'illumination commun (TI), et des premier et second trajets de collection (TC1 et TC2) montés en parallèle et aptes à se rejoindre selon un trajet de collection commun (TCC) au niveau de moyens d'analyse (MAN), le premier étage (ET1) comprenant au moins un filtre (EF1) ayant une réponse spectrale en transmission complémentaire de celle en réflexion et propre à recevoir un faisceau d'illumination (FLA) et l'injecter sur un échantillon (ECH), et, recevoir la lumière émise (LDF) par l'échantillon ainsi illuminé, et diriger une première portion (ST) de celle-ci selon le premier trajet de collection (TC1), et une seconde portion (AST) de celle-ci complémentaire de la première (ST) vers le second étage de filtrage (ET2) qui reçoit ladite seconde portion (AST) et la dirige après filtrage selon le second trajet de collection (TC2),
caractérisé en ce que le premier étage de filtrage comprend une association de plusieurs filtres (EF1, EF2), mis en série, et agencés pour rapprocher la limite de coupure du premier étage (ET1) d'un côté de la raie du faisceau d'illumination, et en ce que le second étage (ET2) comprend au moins un filtre (EF3) agencé pour rapprocher la limite de coupure du second étage (ET2) de l'autre côté de la raie du faisceau d'illumination, ce qui permet d'obtenir au niveau du trajet de collection commun (TCC) un filtrage du type coupe-bande dont les limites de coupure sont positionnées de part et d'autre de la raie d'illumination en vue d'une analyse optimale des raies de basse fréquence.

4. Dispositif selon la revendication 3, caractérisé en ce que les filtres (EF1, EF2) du premier étage (ET1) sont inclinés selon un angle respectif choisi pour obtenir selon le premier trajet de collection (TC1) un filtrage du type passe-haut dont la densité globale correspond à la somme des densités des filtres ainsi associés et dont la limite de coupure est plus basse que celle obtenue par un seul filtre incliné à son angle optimal.

5. Dispositif selon la revendication 3, caractérisé en ce que le filtre (EF3) du second étage (ET2) est incliné d'un angle d'incidence choisi pour obtenir un filtrage du type passe-haut selon le second trajet de collection (TC2) et dont la densité et la limite de coupure sont choisies pour une analyse optimale des raies de basse fréquence.

6. Dispositif selon la revendication 3, caractérisé en ce qu'il comprend en outre un élément séparateur de faisceaux (LM) de type semi-transparent, placé sur le trajet des faisceaux incidents et réfléchis sur le ou les filtres (EF1, EF3) du premier et/ou du second étages (ET1, ET2) et agencé pour éviter l'obturation desdits faisceaux, ce qui permet d'incliner le ou lesdits filtres (EF1, EF3) selon un angle d'incidence faible ou nul.

7. Dispositif selon la revendication 3, caractérisé en ce que le ou' les filtres (EF1, EF2) du premier étage (ET1) sont fabriqués pour une coupure centrée sur la raie d'illumination tandis que le filtre (EF3) du second étage (ET2) est fabriqué pour une coupure centrée sur une raie différente de la raie d'illumination mais proche de celle-ci.

8. Dispositif selon l'une des revendications précédentes, caractérisé en ce que le ou les filtres (F1, EF1 ou EF3) ayant une réponse spectrale en transmission complémentaire de celle en transmission comprennent des éléments optiques appartenant au groupe formé par les filtres de type Fabry-Perot, les filtres interférentiels à cavités multiples, les filtres multidiélectriques réalisés par des techniques de dépôt de couches minces, les filtres interférentiels de type LIPPMANN, les réseaux de phase en volume, les filtres holographiques dits NOTCHS, ou les filtres de BRAGG ou ASHER, les filtres à réseaux de phase en volume, les filtres à réseaux de diffraction plans ou concaves utilisés en configuration dispersive sous la forme de monochromateurs double ou analogues.

9. Procédé d'optimisation de la position et de la largeur de la bande de coupure d'un dispositif de filtrage optique mis en oeuvre par le dispositif selon l'une des revendications 1 à 8.

T%

Tmax ━ 80%

TRANSMISSION T%

0%

λ₀

λ

FIG.1A

R%

REFLEXION R%

20% ━ Rmin

0%

λ₀

λ

FIG.1B

FIG.2A

FIG.2B

FIG.3A

FIG.3B

FIG.3C

FIG.4

FIG.5A

nombre d'onde en cm$^{-1}$

FIG.5B

nombre d'onde en cm$^{-1}$

FIG.6

FIG.7

FIG.8

FIG.9

EP 0 874 228 A1

FIG.10 A

FIG.10 B

FIG.11C

FIG.11A

FIG.11B

FIG.12A

FIG.12B

FIG.13A

FIG.13B

FIG.14A

FIG.14B

Office européen
des brevets

**RAPPORT DE RECHERCHE EUROPEENNE**

Numéro de la demande

EP 97 40 2924

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 082 464 A (R.L. JOHNSON) 4 avril 1978<br>* colonne 1, ligne 6 - colonne 2, ligne 10 * | 1,3,9 | G01J3/12 |
| A | CH 465 905 A (CESKOSLOVENSKA AKADEMIE VED)<br>* colonne 1, ligne 1 - colonne 3, ligne 8 * | 1,3,9 | |
| A,D | EP 0 535 753 A (DILOR) 7 avril 1993<br>* abrégé *<br>* colonne 5, ligne 9 - colonne 6, ligne 19 *<br>* colonne 9, ligne 3 - colonne 11, ligne 25; figures 5,16,17A * | 1,3,9 | |
| A | D.F. BOWEN ET AL.: "CASCADED WEDGE ETALON FILTER"<br>IBM TECHNICAL DISCLOSURE BULLETIN.,<br>vol. 34, no. 3, août 1991, NEW YORK US,<br>pages 91-97, XP000210459<br>* le document en entier * | 1,3,9 | |
| A | K.V. POPOV ET AL.: "BROADBAND HIGH-REFLECTION MULTILAYER COATINGS AT OBLIQUE ANGLES OF INCIDENCE"<br>APPLIED OPTICS.,<br>vol. 36, no. 10, 1 avril 1997, NEW YORK US,<br>pages 2139-2151, XP002051158<br>* le document en entier * | 1,3,9 | **DOMAINES TECHNIQUES RECHERCHES (Int.Cl.6)**<br>G01J<br>G01N<br>G02B |

-/--

Le présent rapport a été établi pour toutes les revendications

| Lieu de la recherche | Date d'achèvement de la recherche | Examinateur |
|---|---|---|
| LA HAYE | 5 juin 1998 | Horak, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

## RAPPORT DE RECHERCHE EUROPEENNE

Office européen
des brevets

Numéro de la demande

EP 97 40 2924

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | J. SPIGULIS ET AL.: "COMPACT DIELECTRIC REFLECTIVE ELEMENTS. II. MULTICHANNEL FILTER OF CLOSELY SPACED SPECTRAL BANDS" APPLIED OPTICS., vol. 33, no. 28, 1 octobre 1994, NEW YORK US, pages 6638-6641, XP000473134 * le document en entier * ----- | 1,3,9 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 5 juin 1998 | Horak, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)